# FASCICULE DE BREVET EUROPEEN

(11) **EP 3 026 890 B1**
(45) Date de publication et mention de la délivrance du brevet: **05.06.2019**
(21) Numéro de dépôt: 15195535.8
(22) Date de dépôt: 20.11.2015
(51) Int. Cl.: G01T 1/24, H04N 5/376, H04N 5/32, H04N 5/374, H04N 5/378

(54) **CONTRÔLE DE LA DURÉE D'INTÉGRATION DANS UN DISPOSITIF PHOTOSENSIBLE**
STEUERUNG DER INTEGRATIONSZEIT IN EINEM LICHTEMPFINDLICHEN APPARAT
CONTROL OF THE INTEGRATION TIME IN A PHOTOSENSITIVE DEVICE

(30) Priorité: 24.11.2014 FR 1461387
(43) Date de publication de la demande: 01.06.2016
(73) Titulaire: COMMISSARIAT À L'ÉNERGIE ATOMIQUE ET AUX ÉNERGIES ALTERNATIVES, 75015 Paris (FR); SAFRAN, 75015 Paris (FR)
(72) Inventeur: SEGURA PUCHADES, Josep, FONTAINE 38600 (FR)
(74) Mandataire: Collet, Alain

(56) Documents cités:
- EP-A1- 0 364 314
- WO-A1-2013/007695
- FR-A1- 2 593 987
- FR-A1- 2 760 585
- FR-A1- 2 762 741
- FR-A1- 2 861 242
- FR-A1- 2 965 440
- US-B1- 6 529 242

## Description

La présente invention concerne un procédé de commande d'un dispositif photosensible comportant une matrice de pixels photosensibles du type notamment réalisé par des techniques de dépôt de matériaux semi-conducteurs. L'invention concerne également un dispositif photosensible configuré pour mettre en oeuvre le procédé. L'invention peut être mise en oeuvre pour de nombreuses applications telles que par exemple, l'imagerie médicale par rayons X ou la détection d'empreintes digitales.

De nombreux capteurs d'image actuels sont constitués de pixels à plusieurs transistors réalisés par exemple au moyen de technologies mettant en oeuvre des semi-conducteurs complémentaires en silicium cristallin connus dans la littérature anglo-saxonne par leur abréviation CMOS pour : « Complementary Metal Oxide Semiconductor ». Les technologies CMOS permettent un degré d'intégration important. On connait par exemple des pixels comprenant en complément d'un élément photosensible, tel qu'une diode, trois transistors. Ces pixels sont connus sous le nom de pixel 3T. Un des transistors interne au pixel est utilisé pour réinitialiser les charges accumulées dans l'élément photosensible, le deuxième transistor est utilisé en suiveur et le troisième permet la lecture du pixel en connectant la sortie du transistor suiveur à un conducteur de colonne. Ce type de pixel nécessite une commande de réinitialisation, et une commande de lecture. Ces deux commandes sont généralement véhiculées par des conducteurs de ligne.

Certains dispositifs ont recours à des technologies alternatives moins onéreuses à base de dépôt de films en couches minces. Les pixels qui forment un tel dispositif comprennent généralement un élément photosensible associé à un élément remplissant une fonction d'interrupteur. L'élément photosensible est par exemple formé par une diode, montée en série avec l'élément interrupteur. L'élément interrupteur peut être par exemple un transistor ou une diode dite de commutation dont l'état « fermé » ou « passant » permet de lire les charges accumulées dans la diode photosensible lors d'un éclairement, et dont l'état « ouvert » ou « bloqué » permet à la diode photosensible d'accumuler des charges en fonction de l'éclairement. Les deux diodes sont montées avec des sens de conduction opposés, dans une configuration dite « tête-bêche ».

Ces technologies mettent en oeuvre des transistors à effet de champ à couches minces connus dans la littérature anglo-saxonne sous le nom de TFT pour : « Thin-film transistor ». Dans ces techniques de couches minces, plusieurs familles sont utilisées. Les transistors peuvent être à base de silicium amorphe hydrogéné (aSiH), de Silicium poly cristallin, d'oxyde amorphe ou cristallin d'indium, de gallium et de zinc connus sous leur abréviation anglo-saxonne : IGZO. D'autres familles de transistors de type TFT peuvent être mises en oeuvre comme par exemple les TFT organiques.

Les techniques de dépôts en films minces de matériaux semi-conducteurs sur des supports isolants en verre par exemple, permettent de réaliser des matrices de points photosensibles pouvant produire une image à partir d'un rayonnement visible ou proche du visible. Pour utiliser ces matrices dans la détection d'images radiologiques, on peut interposer entre le rayonnement X et la matrice, un écran scintillateur pour convertir le rayonnement X en rayonnement lumineux dans la bande de longueurs d'onde auxquelles les pixels sont sensibles.

A la différence des pixels 3T, les technologies alternatives ne possèdent qu'un seul élément interrupteur. Ces technologies sont décrites par exemple dans la demande de brevet FR 2 760 585 A1. Elles ne nécessitent qu'une seule ligne de commande par pixel, c'est ce qui fait leur simplicité. Lorsque l'élément interrupteur est à l'état passant les charges accumulées dans l'élément photosensible sont transférées par un conducteur de colonne vers un circuit de lecture. Au niveau du pixel, il n'y a pas de commande de réinitialisation. Le transfert des charges remplit la fonction de réinitialisation du pixel. Autrement dit, l'opération de lecture et de réinitialisation sont simultanées.

Un pixel donné n'est adressé qu'une seule fois par trame. En conséquence, son temps d'intégration est égal à la durée de la trame.

Le contrôle du temps d'intégration peut être réalisé de façon extérieure à la matrice photosensible, par exemple au moyen d'un obturateur ne laissant l'éclairage incident atteindre le dispositif qu'une fraction de la durée de la trame. Dans des applications à base de rayons X, la source est généralement contrôlée. Des flashes de rayons X sont émis en fonction du pilotage de la trame. De façon plus générale, le temps d'exposition du dispositif photosensible n'est pas piloté par les commandes de la matrice photosensible.

Dans les applications vidéo (prise d'images consécutives) avec contrôle de la source (stroboscopie), même si le pixel en état d'intégration ne reçoit pas de lumière, l'élément actif continue à générer du signal parasite. Dans le cas de la photodiode, le courant d'obscurité va se superposer au signal utile, ce qui réduit la dynamique disponible du dispositif.

Si le rayonnement incident est continu (pas d'obturateur) l'inconvénient est l'éventuelle saturation du pixel à cause d'un temps d'intégration excessif par rapport à la quantité de rayonnement incident. Il est possible de réduire le temps d'intégration en augmentant la vitesse de la trame. Mais cette réduction entraine une diminution de la durée de lecture de chaque pixel et nécessite donc une augmentation de la bande passante. Une photodiode se comporte comme une capacité dans laquelle des charges sont stockées durant le temps d'intégration. Lorsque la quantité de charges dépasse une limite dépendant de la polarisation de la photodiode l'excédent de charges peut soit se déverser sur les pixels voisins ce qui génère de la diaphonie entre pixels, soit sur le conducteur colonne utilisé pour la lecture des pixels en débloquant l'élément interrupteur, ce qui génère un artéfact dans l'image issue du dispositif sous forme d'un trait vertical.

Un contrôle de la durée d'intégration indépendant de la durée de la trame peut donc s'avérer utile afin d'éviter ces effets. Ceci est possible dans les dispositifs photosensible de type 3T au moyen du transistor de remise à zéro mais pas dans les dispositifs dont les pixels ne comprennent qu'un seul élément interrupteur.

L'invention vise à pallier tout ou partie des problèmes cités plus haut en proposant un mode de pilotage d'un dispositif photosensible à un seul élément interrupteur de sélection par pixel tout en permettant de contrôler la durée d'intégration de chaque pixel.

A cet effet, l'invention a pour objet un procédé de commande d'un dispositif photosensible comprenant une matrice de pixels repartis aux intersections de lignes et de colonnes de la matrice, selon la revendication 1.

Dans un mode de réalisation préféré, on enchaîne des phases de lecture des différentes lignes de la matrice, chaque phase de lecture comprenant deux étapes successives, une première des deux étapes consistant à activer l'interrupteur de sélection et le circuit de lecture, une seconde des deux étapes consistant à désactiver l'interrupteur de sélection et à remettre à zéro le circuit de lecture, dans lequel la première activation de l'interrupteur de sélection des pixels de la première ligne donnée intervient pendant la seconde étape de la phase de lecture de la seconde ligne de pixels.

N définit le nombre total de lignes de pixels, T_{ligne} définit la durée d'une phase de lecture. Avantageusement, la durée d'intégration prédéfinie Tᵢₙₜ=k* T_{ligne} avec k entier inférieur ou égal à N-2.

La durée de la première étape peut être supérieure à la durée de la seconde étape afin de ne pas prolonger inutilement la durée de la seconde étape.

Avantageusement, le dispositif comprenant un registre vertical, des signaux de pilotage des interrupteurs de sélection sont générés via le registre vertical qui comprend un registre à décalage dont les sorties successives génèrent les signaux dans l'ordre des lignes de pixels, le registre à décalage recevant au moins deux jetons décalés temporellement, le premier des deux jetons permettant d'initier la première activation de l'interrupteur de sélection, le second des deux jetons permettant d'initier la seconde activation de l'interrupteur de sélection.

Pour chacun des pixels, la première activation de l'interrupteur de sélection est répétée plusieurs fois, la durée séparant deux premières activations successives étant inférieure à la durée d'intégration prédéfinie.

Pour chacun des pixels, la première activation de l'interrupteur de sélection peut être répétée à chaque désactivation du circuit de lecture sauf pendant la durée d'intégration prédéfinie.

Il est possible de prédéfinir plusieurs durées d'intégrations distinctes, au moins l'une durées d'intégrations étant précédée par la première activation de l'interrupteur de sélection en désactivant le circuit de lecture associé.

L'invention a également pour objet un dispositif photosensible mettant en oeuvre un procédé selon l'invention, le dispositif comprenant un registre vertical configuré pour piloter les interrupteurs et le circuit de lecture de façon à mettre en oeuvre le procédé.

L'invention sera mieux comprise et d'autres avantages apparaîtront à la lecture de la description détaillée d'un mode de réalisation donné à titre d'exemple, description illustrée par le dessin joint dans lequel :
la figure 1 représente de façon schématique un pixel associé à un circuit de lecture ;
la figure 2 représente un dispositif photosensible comprenant le pixel et le circuit de lecture de la figure 1, et mettant en oeuvre un procédé conforme à l'invention ;
la figure 3 représente sous forme de chronogramme différentes commandes du dispositif photosensible permettant de mettre en oeuvre le procédé décrit à l'aide de la figure 2 ;
la figure 4 représente un registre à décalage permettant de générer des signaux de pilotage du dispositif de la figure 2 ;
la figure 5 représente sous forme de chronogramme, différentes commandes du dispositif photosensible adaptées au registre à décalage de la figure 4 ;
la figure 6 représente sous forme de chronogramme différentes commandes du dispositif photosensible adaptées à la réinitialisation multiple ;
la figure 7 représente un extrait de chronogramme illustrant une lecture en double échantillonnage ;
la figure 8 représente un dispositif photosensible illustrant un procédé définissant plusieurs durées d'intégration distinctes.

Par souci de clarté, les mêmes éléments porteront les mêmes repères dans les différentes figures.

Un dispositif photosensible permettant la mise en oeuvre de l'invention comprend des pixels photosensibles organisés en matrice. Les pixels sont disposés à l'intersection de lignes et de colonnes de la matrice. Dans la pratique de tels dispositifs peuvent comprendre un grand nombre de pixels photosensibles. Il est courant que les matrices comprennent plusieurs milliers de lignes et de colonnes dans lesquelles les pixels sont identiques.

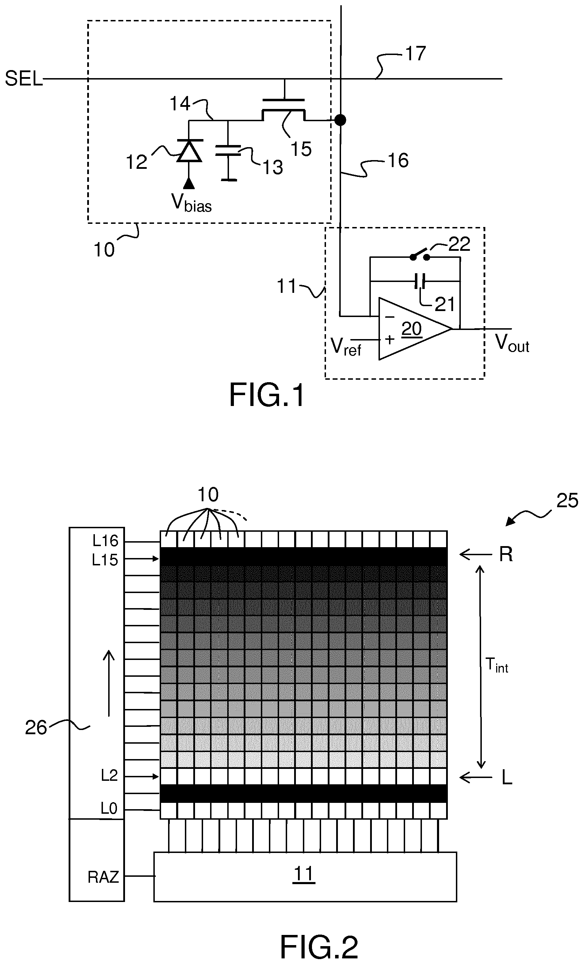

La figure 1 représente un pixel 10 de la matrice associé à un circuit de lecture 11 disposé à une extrémité de la colonne à laquelle appartient le pixel représenté. Le circuit de lecture 11 est commun à tous les pixels d'une même colonne mais pour ne pas surcharger la figure, un seul pixel est ici représenté.

Le pixel 10 comprend un élément photosensible comme par exemple une photodiode 12. Alternativement, d'autres éléments photosensibles peuvent être mis en oeuvre, comme par exemple une photorésistance ou un phototransistor. La photodiode 12 présente une capacité parasite 13 schématisée sur la figure 1. La capacité parasite est mise à profit dans la transformation du rayonnement incident en information électrique. Plus précisément, la photodiode 12 opère une conversion des photons reçus en charges électriques stockées dans la capacité 13 de la photodiode 12. La photodiode est polarisée en inverse au moyen d'une tension V_{bias} négative présente à son anode. La cathode de la photodiode 12 forme le noeud 14 du pixel 10. Alternativement, il est possible d'inverser le montage de la photodiode. Le noeud du pixel est alors formé à l'anode et la tension de polarisation, présente sur la cathode, est alors positive. La tension du noeud 14 est fonction de l'éclairement reçu par le pixel 10. Le pixel 10 comprend en outre un interrupteur électronique appelé interrupteur de sélection formé ici par un transistor 15 permettant de raccorder le noeud 14 à un conducteur de colonne 16 de la matrice. Alternativement, la fonction d'interrupteur électronique peut également être remplie par une diode de commutation. La tension du noeud 14 est flottante, lorsque l'interrupteur 15 est ouvert. Le transistor 15 est piloté par un signal SEL présent sur un conducteur de ligne 17 de la matrice. Le conducteur de ligne 17 est commun à tous les pixels 10 d'une même ligne de la matrice. Les transistors 15 des différents pixels 10 d'une même ligne sont donc pilotés simultanément par le même signal SEL. Pour lire le pixel 10, le signal SEL est activé et les charges accumulées au noeud 14 sont transférées sur le conducteur de colonne 16.

Il est bien entendu que les appellations lignes et colonnes sont conventionnelles. Ces appellations peuvent être échangées.

Le circuit de lecture 11 comprend un amplificateur 20 dont l'entrée inverseuse est raccordée au conducteur de colonne 16. L'entrée non inverseuse de l'amplificateur 20 reçoit une tension de référence V_{ref}. Une capacité 21 est placée dans la contreréaction de l'amplificateur 20 entre la sortie de l'amplificateur 20 et son entrée inverseuse. Lors de la lecture du pixel 10, les charges accumulées au noeud 14 sont transférées par le transistor 15 vers la capacité 21. La tension de sortie Vₒᵤₜ de l'amplificateur 20 est ensuite transférée vers un multiplexeur (non représenté) formé par exemple d'un ensemble d'interrupteurs commandés par un registre à décalage. Le multiplexeur permet de collecter les signaux issus des différentes colonnes de la matrice. Le circuit de lecture 11 comprend aussi un interrupteur électronique 22 connecté en parallèle de la capacité 21. L'interrupteur 22 permet la remise à zéro du circuit de lecture 11. Plus précisément, lors de la lecture du pixel 10, l'interrupteur 22 est ouvert et le signal électrique du pixel est transposé en tension Vₒᵤₜ à la sortie de l'amplificateur 20. Une fois la lecture achevée, le circuit de lecture 11 est remis à zéro en fermant l'interrupteur 22. L'amplificateur 20 se comporte alors comme un suiveur et le conducteur de colonne 16 prend la tension V_{ref}. Une phase de lecture du pixel 10 consiste donc à enchainer deux étapes. Dans une première étape, l'interrupteur 22 est ouvert permettant la lecture proprement dite du pixel 10 et dans une deuxième étape, suivant immédiatement la première étape, l'interrupteur 22 est fermé afin de réinitialiser le potentiel de la capacité 21.

La figure 2 représente un dispositif photosensible 25 comprenant 17 lignes et 17 colonnes de pixels 10 organisés en matrice. Les lignes sont ici numérotées L0 à L16. Comme énoncé plus haut, le nombre de lignes et de colonnes ne sont donnés qu'à titre d'exemple. Les matrices réelles comprennent généralement un plus grand nombre de lignes ou de colonnes. Le dispositif photosensible 25 comprend en outre un registre vertical 26 permettant notamment de générer les signaux SEL des différentes lignes de la matrice. A cet effet, le registre vertical 26 est raccordé à autant de conducteurs de ligne 17 que de lignes de la matrice. On retrouve aussi le circuit de lecture 11 raccordé à tous les conducteurs de colonne 16. Le circuit de lecture 11 comprend autant d'amplificateurs 20 que de colonnes de pixels dans la matrice. Le circuit de lecture 11 permet de lire les signaux générés dans les différents pixels 10 en fonction de l'éclairement reçu par chacun. Un bloc séparé du registre vertical 26 permet de générer un signal RAZ permettant de piloter les différents interrupteurs 22 associés à chacun des amplificateurs 20 du circuit de lecture 11. Ce bloc peut générer aussi les horloges nécessaires au circuit de lecture 11 et au multiplexeur associé. Ce bloc peut également être intégré au registre vertical 26.

Le temps d'intégration d'un pixel 10 est défini comme la durée séparant deux activations successives du signal SEL. Entre ces deux activations, l'interrupteur 15 est ouvert et la photodiode 12 est isolée du conducteur de colonne 16, ce qui permet une intégration des charges sur sa cathode. Afin de contrôler le temps d'intégration de chaque pixel 10, selon l'invention, pour une ligne de pixels 10 donnée, on ajoute une phase de lecture « à vide » séparée de la phase de lecture effective du temps d'intégration souhaité. Cette phase de lecture à vide consiste à fermer l'interrupteur 22 et à activer le signal SEL simultanément afin de vider toutes les charges du noeud 14 vers la sortie de l'amplificateur 20 configuré en suiveur (Vₒᵤₜ=V_{ref}).

Autrement dit, le procédé consiste pour chacun des pixels à activer l'interrupteur de sélection 15 une première fois en désactivant le circuit de lecture 11 associé et activer l'interrupteur de sélection 15 une seconde fois en activant le circuit de lecture 11 associé. La durée séparant la première activation et la seconde activation de l'interrupteur de sélection 15 étant égale à une durée d'intégration prédéfinie. L'activation du circuit de lecture 11 consiste en une lecture effective du pixel 10 et la désactivation du circuit de lecture consiste en son utilisation sans lecture effective, autrement appelée « lecture à vide » ou réinitialisation du pixel.

Une trame est définie comme un enchainement de phases de lecture successives de toutes les lignes de la matrice. L'invention permet d'obtenir une durée d'intégration inférieure à la durée d'une trame. La première activation de l'interrupteur de sélection 15 d'une ligne donnée (lecture à vide) peut intervenir pendant une phase de lecture d'une autre ligne. Afin d'éviter l'activation simultanée de deux lignes, l'activation de l'interrupteur de sélection 15 de la ligne donnée pour sa réinitialisation intervenant au début de la durée l'intégration intervient lors de la deuxième étape de la phase de lecture d'une autre ligne. Sur la figure 2, la réinitialisation de la ligne L15, notée R, intervient lors de la phase de lecture de la ligne L2, notée L, et plus précisément lors de sa deuxième étape.

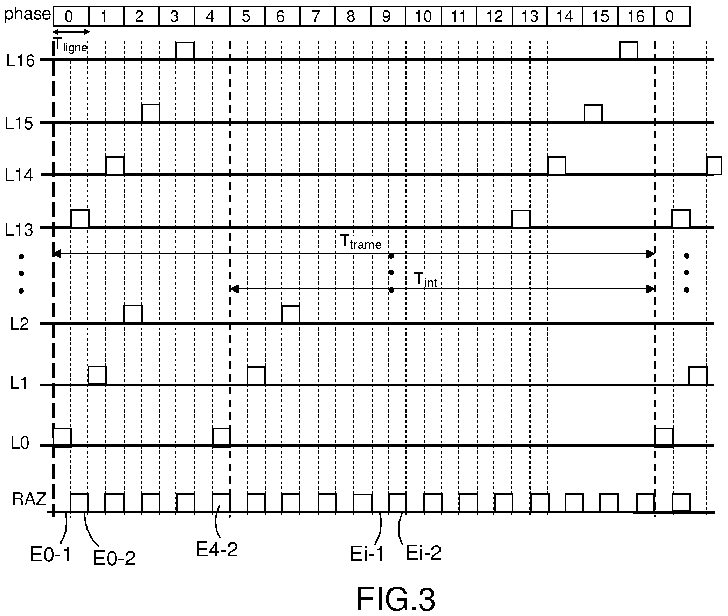

La figure 3 représente sous forme de chronogramme, différentes commandes du dispositif photosensible 25. Ces commandes sont générées par le registre vertical 26. Sur la figure 2 sont représentés les signaux SEL des différentes lignes de pixels 10 du dispositif photosensible 25. Pour ne pas surcharger la figure, seuls les signaux des lignes L0, L1, L2, L13, L14, L15 et L16 sont représentés. Les signaux SEL des lignes L3 à L12 peuvent facilement se déduire par décalage temporel. Sur la figure 3, le signal RAZ de pilotage des différents interrupteurs 22 du circuit de lecture 11 est également représenté. Par convention, les différents signaux sont représentés à un état bas lorsque l'interrupteur 22 piloté est ouvert et à un état haut lorsque l'interrupteur 22 piloté est fermé. Les tensions des signaux SEL et RAZ correspondant aux deux niveaux sont adaptées aux interrupteurs 22 utilisés.

L'axe temporel du chronogramme est gradué en phases de lecture successives. La durée d'une phase est notée T_{ligne}. Cette durée est uniforme pour toutes les lignes de la matrice et les phases de lecture s'enchainent dans l'ordre des lignes de la matrice. Plus précisément, durant la phase 0, la lecture de la ligne L0 est réalisée. On retrouve les deux étapes repérées ici EO-1 et EO-2. Durant l'étape EO-1, le signal SEL de la ligne L0 est activé (niveau haut) et l'interrupteur 15 de chacun des pixels de la ligne L0 est fermé. Durant l'étape EO-2, le signal RAZ est au niveau haut, permettant la fermeture de l'ensemble des interrupteurs 22 du circuit de lecture 11. Cette étape correspond à la désactivation du circuit de lecture 11. En d'autres termes, les capacités 21 ne récupèrent pas de charges. La phase 0 est reproduite en fin de chronogramme après la phase 16. La durée d'une trame s'étend entre deux phases identiques. Sur la figure 3, la durée d'une trame est repérée Tₜᵣₐₘₑ et est visualisée entre le début de deux phases 0 successives. Les phases de lecture s'enchainant sans temps mort entre phases, on a Tₜᵣₐₘₑ = N.T_{ligne}, N représentant le nombre de lignes de pixels 10 de la matrice. N=17 dans l'exemple représenté.

La phase 1 suit immédiatement la phase 0 et ainsi de suite. Les phases de lecture des différentes lignes s'enchainent dans l'ordre des lignes. Les phases de différentes lignes sont toutes semblables. On y retrouve les étapes Ei-1 et Ei-2 pour une ligne courante i. Les étapes Ei-1 et Ei-2 sont respectivement semblables aux étapes EO-1 et EO-2.

Afin de définir une durée d'intégration Tᵢₙₜ inférieure à la durée de la trame Tₜᵣₐₘₑ, les pixels des différentes lignes sont réinitialisées une fois entre deux lectures effectives. Plus précisément, sans réinitialisation supplémentaire, la durée d'intégration serait égale à la durée de la trame à laquelle est soustrait la durée d'une sous étape de réinitialisation, c'est-à-dire environ 16,5 durées d'une phase dans cet exemple.

On notera que la réinitialisation supplémentaire d'un pixel d'une ligne Lj apparaît donc au plus tôt à la fin de la phase de lecture (étape Ei-2) d'une ligne Li qui est lue juste après la ligne Lj. Autrement dit, la durée d'intégration Tᵢₙₜ est au plus égal à (N-2)* T_{ligne} ce qui correspond à une durée maximale inférieure à la durée susmentionnée (16,5* T_{ligne}) qui serait obtenue sans réinitialisation supplémentaire.

De façon générale, Tᵢₙₜ=k* T_{ligne} avec k entier inférieur ou égal à N-2. Dans l'exemple représenté, les pixels de la ligne L0 sont réinitialisés lors de la phase 4 et plus précisément lors de l'étape E4-2. Ainsi la durée d'intégration Tᵢₙₜ est égale à 12 phases, ainsi Tᵢₙₜ=k* T_{ligne} avec k égal à 12 dans cet exemple. Entre l'étape EO-1 (lecture effective de la ligne LO) et l'étape E4-2 (lecture à vide de la ligne L0) l'intégration réalisée par les photodiodes 12 des pixels 10 de la ligne L0 est simplement évacuée par les conducteurs de colonne 16 sans être lue. Pour les autres lignes, la réinitialisation supplémentaire sans lecture d'une ligne courante i intervient 4 phases après l'étape Ei-2 de la ligne considérée. Par exemple pour la ligne L13, le signal SEL est activé durant l'étape E0-2.

Le registre vertical 26 peut être formé par un décodeur d'adresses. Alternativement, le registre vertical 26 peut être formé par un registre à décalage, qui occupe moins de surface, nécessite moins d'entrées et est relativement facile à intégrer dans une technologie TFT.

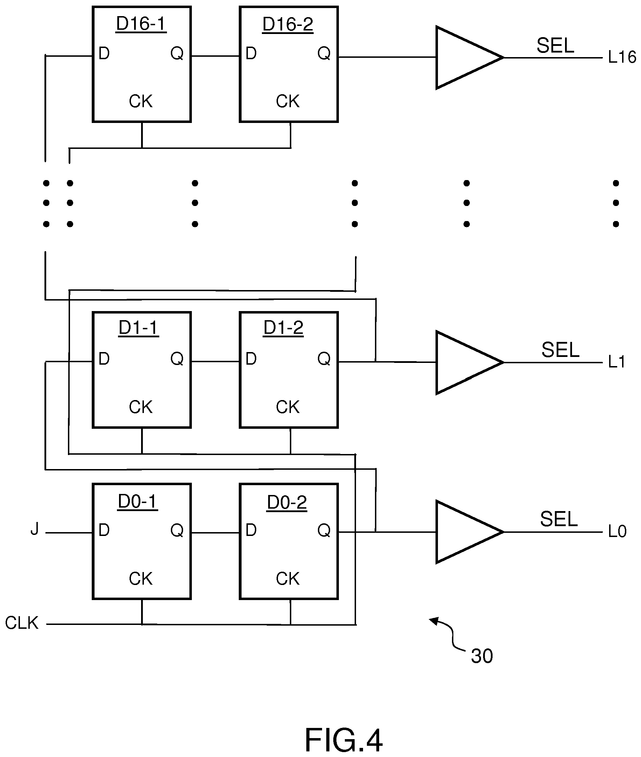

La figure 4 représente un exemple de registre à décalage pouvant être utilisé dans le registre vertical 26 pour générer les signaux SEL. Pour chaque ligne i, le signal SEL est formé à l'aide de deux bascules D : Di-1 et Di-2 raccordées en série. La sortie de la bascule Di-2 forme le signal SEL de la ligne i et est connectée à l'entrée de la bascule Di+1-1. Un signal d'horloge CLK est commun à toutes les bascules D. Un jeton J est émis vers l'entrée de la bascule DO-1.

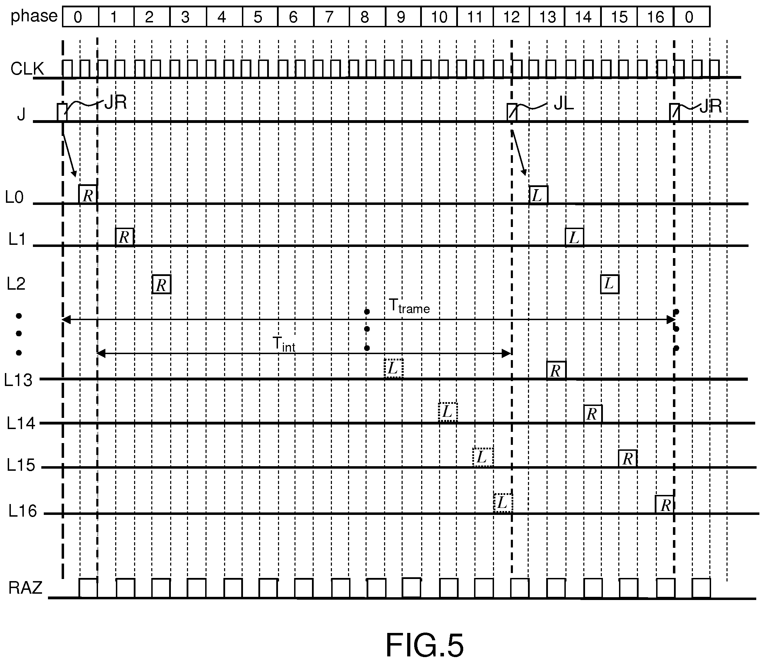

La figure 5 représente sous forme de chronogramme, différentes commandes du dispositif photosensible adaptées au registre à décalage représenté sur la figure 4. L'axe temporel est, comme pour la figure 3, découpé selon les phases de lectures des différentes lignes. On retrouve, comme sur la figure 3, les signaux SEL des lignes L0, L1, L2, L13, L14, L15 et L16 ainsi que le signal RAZ. Sur la figure 5, on a représenté le signal d'horloge CLK dont la fréquence est double de celle des phases ainsi que le jeton J. Dans une trame, le jeton J est introduit deux fois, une fois pour la réinitialisation de la ligne de pixel (lecture à vide) et une autre fois pour la lecture proprement dite. Un décalage d'une demi-phase pour les deux jetons permet d'obtenir soit une fermeture simultanée des interrupteurs 15 et 22, pour la réinitialisation en début d'intégration, soit une fermeture de l'interrupteur 15 suivie d'une fermeture de l'interrupteur 22 pour la lecture en fin d'intégration.

Sur la figure 5, le premier jeton noté JR est émis en début de phase 0 et le second jeton noté JL est émis au milieu de la phase 12. Le décalage temporel entre les deux jetons donne la durée d'intégration Tᵢₙₜ qui est de 12,5 phases dans l'exemple représenté.

Dans l'exemple représenté, les deux étapes des différentes phases ont des durées identiques. Cela est principalement dû à la fréquence de l'horloge CLK qui est double de celle des phases. Or la durée nécessaire pour que les charges accumulées dans un pixel 10 soient transférées vers la capacité 21 du circuit de lecture 11 lors d'une opération de lecture (étape Ei-1), est plus importante que la durée nécessaire à la réinitialisation de la capacité 21 (étape Ei-2). Pour un fonctionnement correct du procédé, en mettant en oeuvre une horloge symétrique, la fréquence d'horloge doit être définie en fonction de l'étape nécessitant la plus longue durée, en l'occurrence l'étape Ei-1. L'étape Ei-2 est donc inutilement prolongée. Avantageusement, on réduit la durée de toutes les étapes Ei-2 par rapport à la durée des étapes Ei-1. Cela permet de réduire la durée de trame. Cette différentiation des durées des étapes Ei-1 et Ei-2 est par exemple mise en oeuvre au moyen d'une horloge asymétrique, la durée d'un top d'horloge utilisé pour une étape Ei-1 étant plus longue que celle d'un top d'horloge utilisé pour une étape Ei-2.

Dans les cas de fort rayonnement incident (éclairage intense) où un temps d'intégration très court est nécessaire, une saturation des pixels peut intervenir entre la lecture proprement dite du pixel et une réinitialisation ultérieure. On a vu plus haut que les charges accumulées dans le pixel entre la lecture et la réinitialisation sont évacuées dans le conducteur de colonne 16 sans être lues. Bien que ces charges ne soient pas utilisées, elle sont tout de même susceptibles de saturer le pixel avec les risques déjà mentionnés, diaphonie ou artéfact sous forme de ligne verticale dans l'image. Ce risque de saturation est d'autant plus élevé que la durée d'intégration Tᵢₙₜ souhaitée est faible par rapport à la durée d'une trame Tₜᵣₐₘₑ. Pour limiter ce risque de saturation, on peut réinitialiser les pixels d'une ligne plusieurs fois avant de début de l'intégration proprement dite, la durée séparant deux réinitialisations successives étant inférieure à la durée d'intégration prédéfinie Tᵢₙₜ.

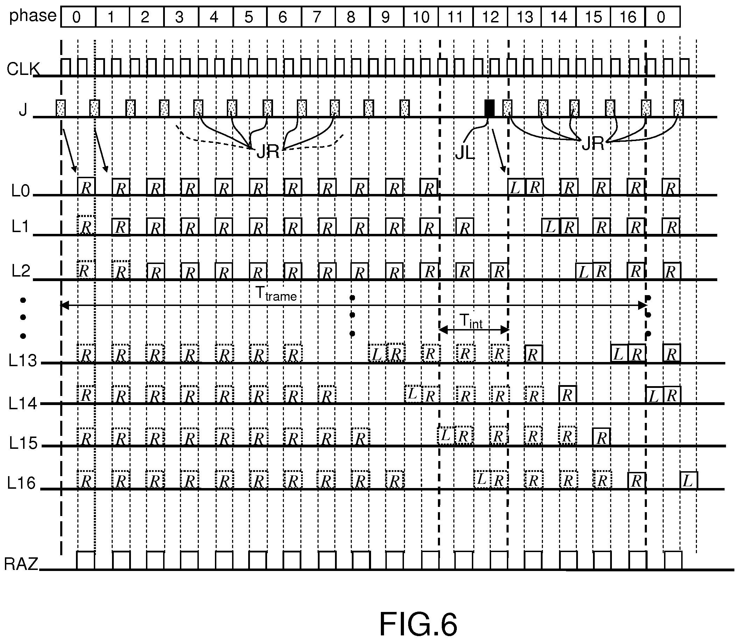

La figure 6 représente, sous forme de chronogramme, différentes commandes du dispositif photosensible adaptées à la réinitialisation multiple avant l'intégration utile donnant lieu à la lecture des pixels. Dans l'exemple représenté la durée d'intégration Tᵢₙₜ est égale à deux fois la durée d'une phase, soit : Tᵢₙₜ =2.T_{ligne} (Tᵢₙₜ=k* T_{ligne} avec k égal à 2 dans cet exemple). On a vu précédemment qu'un jeton JR émis en début d'une phase de lecture générait une réinitialisation sans lecture et qu'un jeton JL émis en milieu d'une phase de lecture générait une lecture du pixel. Pour réaliser des réinitialisations multiples, plusieurs jetons JR sont émis. La durée d'intégration Tᵢₙₜ correspond à la durée séparant deux jetons successifs dont le premier est un jeton JR et le second est un jeton JL. On peut émettre des jetons de type JR au début de toutes les phases de lecture qui suivent le jeton JL jusqu'au jeton JR marquant le début de la durée d'intégration Tᵢₙₜ. En dehors du temps d'intégration Tᵢₙₜ, il est possible de réinitialiser le pixel considéré systématiquement, comme cela est représenté sur la figure 6. Autrement dit, la première activation de l'interrupteur de sélection 15 est répétée à chaque désactivation du circuit de lecture 11 sauf pendant la durée d'intégration prédéfinie Tᵢₙₜ. Cette réinitialisation systématique n'est bien entendu pas obligatoire.

Il est possible de mettre en oeuvre l'invention en réalisant la lecture utile de chaque pixel en double échantillonnage corrélé. Celui-ci permet de soustraire les éventuels courants de fuite des transistors 15 qui partagent une même colonne et qui se superposent au signal utile, ainsi que l'offset de l'amplificateur 20.

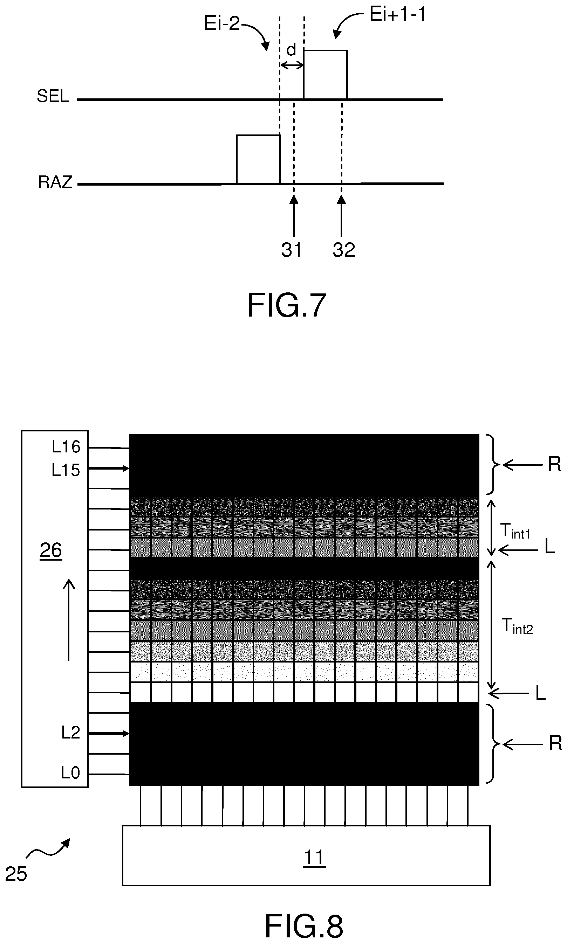

La figure 7 représente un extrait de chronogramme permettant de mettre en oeuvre le double échantillonnage. Sur la figure 7, sont représentés un signal SEL pour une étape Ei-2 et le signal RAZ pour une étape Ei+1-1. Le double échantillonnage consiste à réaliser un premier échantillonnage 31 (interrupteur 22 ouvert) avec tous les transistors 15 ouverts juste avant un échantillonnage 32 réalisé pour la lecture proprement dite du pixel. Lors du traitement de l'image réalisa en aval du multiplexeur, le signal issu du premier échantillonnage 31 est retranché du signal issu du second échantillonnage. Pour réaliser ces deux échantillonnages, on peut décaler le signal SEL de l'étape Ei+1-1 du signal RAZ de l'étape Ei-2. Une durée d illustrée sur la figure 7 représente ce décalage temporel. Le premier échantillonnage 31 est réalisé pendant la durée d. La figure 8 représente un dispositif photosensible 25 illustrant un procédé définissant plusieurs durées d'intégration Tᵢₙₜ₁ et Tᵢₙₜ₂. Le procédé consiste à lire durant une trame chacun des pixels plusieurs fois, chaque fois avec une durée d'intégration différente Tᵢₙₜ₁ et Tᵢₙₜ₂. En sortie du circuit de lecture 11, on forme plusieurs images, chacune avec une durée d'intégration distincte. Les images peuvent ensuite être fusionnées pour constituer une image à haute dynamique. On peut par exemple attribuer aux pixels saturés pendant une intégration longue, les valeurs issues d'une intégration courte multipliées par le facteur de gain égal à Tᵢₙₜ₂/Tᵢₙₜ₁.

Sur la figure 8, on a représenté le dispositif photosensible lu avec deux durées d'intégration, l'une Tᵢₙₜ₁ durant 3 phases de lecture et l'autre Tᵢₙₜ₂ durant 7 phases de lecture. La première durée d'intégration Tᵢₙₜ₁ est lancée par une réinitialisation sans lecture de la ligne de pixels correspondante. Les deux durées d'intégration peuvent se suivre sans temps mort. Dans ce cas, la lecture réalisée à la fin de la durée d'intégration Tᵢₙₜ₁ vide les charges accumulées dans les pixels de la ligne correspondante et lance le début de la seconde durée d'intégration Tᵢₙₜ₂. La réinitialisation intervenant avant la durée d'intégration Tᵢₙₜ₁ permet de choisir de façon plus libre les deux durées d'intégration Tᵢₙₜ₁ et Tᵢₙₜ₂. La somme des deux durées d'intégration Tᵢₙₜ₁ et Tᵢₙₜ₂ peut être inférieure à la durée totale d'une trame Tₜᵣₐₘₑ.

A l'issu de la lecture terminant la durée d'intégration Tᵢₙₜ₂ et avant de lancer, à la trame suivante, une nouvelle durée d'intégration Tᵢₙₜ₁, on peut, comme proposé à l'aide de la figure 6, réaliser plusieurs réinitialisations afin d'éviter tout risque de saturation des pixels.

Le chronogramme de la figure 8 peut être mis en oeuvre au moyen d'un registre s'inspirant de celui de la figure 4, par exemple en utilisant trois bascules par étage.

## Revendications

1. Procédé de commande d'un dispositif photosensible (25) comprenant une matrice de pixels (10) repartis aux intersections de lignes et de colonnes de la matrice, chacun des pixels (10) comprenant un élément photosensible (12) apte à générer un signal électrique sous l'effet d'un rayonnement incident et un interrupteur de sélection (15) piloté par un conducteur de ligne (17), l'interrupteur de sélection (15) permettant de transférer le signal électrique vers un conducteur de colonne (16), le dispositif comprenant en outre un circuit de lecture (11) connecté au conducteur de colonne (16) et destiné à lire successivement les différents pixels (10) raccordés au conducteur de colonne (16), le dispositif comprenant aussi un registre vertical (26) configuré pour piloter les interrupteurs de sélection (15) et le circuit de lecture (11) de façon à mettre en oeuvre le procédé, le procédé conduisant pour chacun des pixels (10) à activer l'interrupteur (15) une première fois pour réinitialiser le pixel considéré en désactivant le circuit de lecture (11) associé et activer l'interrupteur de sélection (15) une seconde fois pour lire de façon effective le pixel considéré en activant le circuit de lecture (11) associé, la durée séparant la première activation et la seconde activation de l'interrupteur de étant égale à une durée d'intégration prédéfinie (Tᵢₙₜ), dans lequel la seconde activation de l'interrupteur de sélection (15) intervient au cours d'une phase de lecture d'une première ligne de pixel donnée à laquelle appartient l'interrupteur de sélection (15) considéré, dans lequel la première activation de l'interrupteur de sélection (15) de pixels de la première ligne donnée intervient pendant une phase de lecture d'une seconde ligne de pixels distincte de la première ligne de pixels, dans lequel on enchaîne des phases de lecture des différentes lignes de la matrice, chaque phase de lecture comprenant deux étapes successives, une première des deux étapes (Ei-1) consistant à activer l'interrupteur de sélection (15) et le circuit de lecture (11), une seconde des deux étapes (Ei-2) consistant à désactiver l'interrupteur (15) et à remettre à zéro le circuit de lecture (11), et dans lequel la première activation de l'interrupteur de sélection (15) des pixels de la première ligne donnée intervient pendant la seconde étape de la phase de lecture de la seconde ligne de pixels.

2. Procédé de commande selon la revendication 1, dans lequel la durée de la première étape (Ei-1) est supérieure à la durée de la seconde étape (Ei-2).

3. Procédé de commande selon l'une des revendications précédentes, dans lequel, le dispositif comprenant un registre vertical (26), des signaux (SEL) de pilotage des interrupteurs de sélection (15) sont générés via le registre vertical (26) qui comprend un registre à décalage (30) dont les sorties successives génèrent les signaux (SEL) dans l'ordre des lignes de pixels (10), le registre à décalage (30) recevant au moins deux jetons (JR, JL) décalés temporellement, le premier des deux jetons (JR) permettant d'initier la première activation de l'interrupteur de sélection (15), le second des deux jetons (JL) permettant d'initier la seconde activation de l'interrupteur de sélection (15).

4. Procédé de commande selon l'une des revendications précédentes, dans lequel pour chacun des pixels, la première activation de l'interrupteur (15) est répétée plusieurs fois, la durée séparant deux premières activations successives étant inférieure à la durée d'intégration prédéfinie (Tᵢₙₜ).

5. Procédé de commande selon la revendication 4, dans lequel pour chacun des pixels (10) la première activation de l'interrupteur de sélection (15) est répétée à chaque désactivation du circuit de lecture (11) sauf pendant la durée d'intégration prédéfinie (Tᵢₙₜ).

6. Procédé de commande selon l'une des revendications précédentes, dans lequel plusieurs durées d'intégrations distinctes (Tᵢₙₜ₁, Tᵢₙₜ₂) sont prédéfinies, au moins l'une durées d'intégrations étant précédée par la première activation de l'interrupteur de sélection (15) en désactivant le circuit de lecture (11) associé.

7. Dispositif photosensible (25) mettant en oeuvre un procédé selon l'une des revendications précédentes, le dispositif comprenant un registre vertical (26) configuré pour piloter les interrupteurs de sélection (15) et le circuit de lecture (11) de façon à mettre en oeuvre le procédé.

## Patentansprüche

1. Verfahren zum Steuern einer lichtempfindlichen Vorrichtung (25), welche eine Matrix aux Pixeln (10) beinhaltet, welche an den Schnittpunkten von Zeilen und Spalten der Matrix verteilt sind, wobei jeder Pixel (10) ein lichtempfindliches Element (12) beinhaltet, welches in der Lage ist, ein elektrisches Signal unter Einwirkung einer einfallenden Strahlung zu erzeugen und einen Wählschalter (15), welcher von einem Zeilenleiter (17) gesteuert wird, wobei der Wählschalter (15) es ermöglicht, das elektrische Signal an einen Spaltenleiter (16) zu übertragen, wobei die Vorrichtung zudem einen Leseschaltkreis (11) beinhaltet, welcher mit dem Spaltenleiter (16) verbunden und dazu bestimmt ist, nacheinander die unterschiedlichen Pixel (10) zu lesen, die am Spaltenleiter (16) angeschlossen sind, wobei die Vorrichtung ebenfalls ein vertikales Register (26) beinhaltet, welches konfiguriert ist, um die Wählschalter (15) und den Leseschaltkreis (11) zu steuern, um das Verfahren umzusetzen, wobei das Verfahren jeden der Pixel (10) dazu führt, den Schalter (15) ein erstes Mal zu aktivieren, um den betrachteten Pixel zu reinitialisieren, indem der dazugehörige Leseschaltkreis (11) deaktiviert wird, und den Wählschalter (15) ein zweites Mal zu aktivieren, um den betrachteten Pixel effektiv zu lesen, indem der dazugehörige Leseschaltkreis (11) aktiviert wird, wobei die Dauer, welche die erste und die zweite Aktivierung des Schalters trennt, gleich einer vorbestimmten Integrationsdauer (Tᵢₙₜ) ist, wobei die zweite Aktivierung des Wählschalters (15) im Zuge einer Lesephase einer ersten gegebenen Pixelzeile erfolgt, zu welcher der betrachtete Wählschalter (15) gehört, wobei die erste Aktivierung des Wählschalters (15) von Pixeln der ersten gegebenen Zeile während einer Lesephase einer zweiten Pixelzeile erfolgt, welche sich von der ersten Pixelzeile unterscheidet, wobei man nacheinander Lesephasen der unterschiedlichen Zeilen der Matrix abwickelt, wobei jede Lesephase zwei aufeinander folgende Schritte beinhaltet, wobei ein erster der beiden Schritte (Ei-1) darin besteht, den Wählschalter (15) und den Leseschaltkreis (11) zu aktivieren, ein zweiter der beiden Schritte (Ei-2) darin besteht, den Schalter (15) zu deaktivieren und den Leseschaltkreis (11) auf null zurückzusetzen und wobei die erste Aktivierung des Wählschalters (15) der Pixel der ersten gegebenen Zeile während des zweiten Schrittes der Lesephase der zweiten Pixelzeile erfolgt.

2. Verfahren zum Steuern nach Anspruch 1, bei welchem die Dauer des ersten Schrittes (Ei-1) größer als die Dauer des zweiten Schrittes (Ei-2) ist.

3. Verfahren zum Steuern nach einem der vorhergehenden Ansprüche, bei welchem, da die Vorrichtung ein vertikales Register (26) beinhaltet, Signale (SEL) zum Steuern der Wählschalter (15) über das vertikale Register (26) erzeugt werden, welches ein Schieberegister (30) beinhaltet, dessen nacheinander angeordnete Ausgänge die Signale (SEL) in der Reihenfolge der Pixelzeilen (10) erzeugen, wobei das Schieberegister (30) mindestens zwei zeitlich verschobene Token (JR, JL) empfängt, wobei das erste der beiden Token (JR) dazu dient, die erste Aktivierung des Wählschalters (15) zu initiieren, wobei das zweite der beiden Token (JL) dazu dient, die zweite Aktivierung des Wählschalters (15) zu initiieren.

4. Verfahren zum Steuern nach einem der vorhergehenden Ansprüche, bei welchem, für jeden der Pixel, die erste Aktivierung des Schalters (15) mehrfach wiederholt wird, wobei die Dauer, welche zwei erste aufeinander folgende Aktivierungen trennt, kleiner als die vorbestimmte Integrationsdauer (Tᵢₙₜ) ist.

5. Verfahren zum Steuern nach Anspruch 4, bei welchem für jeden der Pixel (10) die erste Aktivierung des Wählschalters (15) bei jeder Deaktivierung des Leseschaltkreises (11) wiederholt wird, ausgenommen während der vorbestimmten Integrationsdauer (Tᵢₙₜ).

6. Verfahren zum Steuern nach einem der vorhergehenden Ansprüche, bei welchem mehrere unterschiedliche Integrationsdauern (Tᵢₙₜ₁, Tᵢₙₜ₂) vorbestimmt sind, wobei mindestens einer der Integrationsdauern die erste Aktivierung des Wählschalters vorausgeht, wodurch sie den dazugehörigen Leseschaltkreis (11) deaktiviert.

7. Lichtempfindliche Vorrichtung (25), welche ein Verfahren nach einem der vorhergehenden Ansprüche umsetzt, wobei die Vorrichtung ein vertikales Register (26) beinhaltet, das konfiguriert ist, um die Wählschalter (15) und den Leseschaltkreis (11) dergestalt zu steuern, dass das Verfahren umgesetzt wird.

## Claims

1. A control method for a photosensitive device (25) comprising a matrix of pixels (10) distributed at the intersections of rows and columns of the matrix, each of the pixels (10) comprising a photosensitive element (12) able to generate an electrical signal under the effect of incident radiation and a selector switch (15) controlled by a row conductor (17), the selector switch (15) allowing the electrical signal to be transferred to a column conductor (16), the device furthermore comprising a readout circuit (11) connected to the column conductor (16) and intended to read out successively the various pixels (10) connected to the column conductor (16), the device comprising also a vertical register (26) configured to control the selector switches (15) and the readout circuit (11) in order to implement the method, the method leading each of the pixels (10) to activate the switch (15) a first time to reset the pixel of interest by deactivating the associated readout circuit (11) and to activate the selector switch (15) a second time to effectively read out the pixel of interest by activating the associated readout circuit (11), the duration separating the first activation and the second activation of the switch being equal to a predefined duration of integration (Tᵢₙₜ), in which the second activation of the selector switch (15) occurs during a readout phase of a given first pixel row to which the selector switch (15) in question belongs, and in which the first activation of the selector switch (15) of pixels of the given first row occurs during a readout phase of a second pixel row distinct from the first pixel row, in which readout phases of the various rows of the matrix are linked together, each readout phase comprising two successive steps, a first of the two steps (Ei-1) consisting in activating the selector switch (15) and the readout circuit (11), a second of the two steps (Ei-2) consisting in deactivating the switch (15) and in zeroing the readout circuit (11), in which the first activation of the selector switch (15) of the pixels of the given first row occurs during the second step of the readout phase of the second pixel row.

2. The control method according to Claim 1, in which the duration of the first step (Ei-1) is greater than the duration of the second step (Ei-2).

3. The control method according to any one of the preceding claims, in which, the device comprising a vertical register (26), control signals (SEL) for the selector switches (15) are generated via the vertical register (26), which comprises a shift register (30) the successive outputs of which generate the signals (SEL) in the order of the pixel rows (10), the shift register (30) receiving at least two time-shifted tokens (JR, JL), the first of the two tokens (JR) allowing the first activation of the selector switch (15) to be initiated, the second of the two tokens (JL) allowing the second activation of the selector switch (15) to be initiated.

4. The control method according to any one of the preceding claims, in which, for each of the pixels, the first activation of the switch (15) is repeated multiple times, the duration separating two successive first activations being smaller than the predefined duration of integration (Tᵢₙₜ).

5. The control method according to Claim 4, in which for each of the pixels (10) the first activation of the selector switch (15) is repeated on each deactivation of the readout circuit (11), except during the predefined duration of integration (Tᵢₙₜ).

6. The control method according to any one of the preceding claims, in which multiple distinct durations of integration (Tᵢₙₜ₁, Tᵢₙₜ₂) are predefined, at least one of the durations of integration being preceded by the first activation of the selector switch (15) by deactivating the associated readout circuit (11).

7. A photosensitive device (25) implementing a method according to any one of the preceding claims, the device comprising a vertical register (26) configured to control the selector switches (15) and the readout circuit (11) in such a way as to implement the method.
